# EUROPÄISCHE PATENTSCHRIFT

(11) **EP 2 931 576 B1**
(45) Veröffentlichungstag und Bekanntmachung des Hinweises auf die Patenterteilung: **19.07.2017**
(21) Anmeldenummer: 13780356.5
(22) Anmeldetag: 23.10.2013
(51) Int. Cl.: B60T 8/48, B60T 13/74

(54) **VERFAHREN ZUM BETREIBEN EINES BREMSSYSTEMS EINES FAHRZEUGS UND STEUERVORRICHTUNG FÜR EIN BREMSSYSTEM EINES FAHRZEUGS**
METHOD FOR OPERATING A BRAKING SYSTEM OF A VEHICLE AND CONTROL DEVICE FOR A BRAKING SYSTEM OF A VEHICLE
PROCÉDÉ POUR FAIRE FONCTIONNER UN SYSTÈME DE FREINAGE D'UN VÉHICULE ET DISPOSITIF DE COMMANDE D'UN SYSTÈME DE FREINAGE D'UN VÉHICULE

(30) Priorität: 12.12.2012 DE 102012222978
(43) Veröffentlichungstag der Anmeldung: 21.10.2015
(73) Patentinhaber: Robert Bosch GmbH, 70442 Stuttgart (DE)
(72) Erfinder: STRENGERT, Stefan, 70469 Stuttgart (DE); NAGAKURA, Yasutaka, 70469 Stuttgart (DE)
(86) Internationale Anmeldenummer: PCT/EP2013/072145
(87) Internationale Veröffentlichungsnummer: WO 2014/090472

(56) Entgegenhaltungen:
- WO-A1-2010/069679
- WO-A1-2010/091756
- WO-A2-2009/083216
- WO-A2-2010/069659
- DE-A1- 19 604 134
- FR-A1- 2 860 474
- US-A1- 2010 084 914

## Beschreibung

Die Erfindung betrifft ein Verfahren zum Betreiben eines Bremssystems eines Fahrzeugs. Des Weiteren betrifft die Erfindung eine Steuervorrichtung für ein Bremssystem eines Fahrzeugs und ein Bremssystem für ein Fahrzeug.

### Stand der Technik

In der DE 196 04 134 A1 sind ein Verfahren und eine Vorrichtung zur Steuerung einer Bremsanlage eines Kraftfahrzeugs mit einem elektrischen Antrieb beschrieben. Bei einem Abbremsen des Fahrzeugs unter Einsatz des elektrischen Antriebs zum gleichzeitigen Aufladen einer Batterie soll das von dem mindestens einen Radbremszylinder der hydraulischen Bremsanlage auf mindestens ein Rad ausgeübte hydraulische Bremsmoment trotz einer Betätigung des Bremspedals reduziert/deaktiviert werden. Dazu soll dem durch die Betätigung des Bremspedals aus dem Hauptbremszylinder zu den Radbremsen verschobenen Druckmittel entgegengewirkt werden, indem durch Öffnen der Radauslassventile der hydraulischen Bremsanlage das aus dem Hauptbremszylinder verschobene Druckmittel über den mindestens einen Radbremszylinder in mindestens eine Speicherkammer überführt wird. Auf diese Weise soll eine von dem elektrischen Antrieb ausgeführte regenerative Abbremsung verblendbar sein.

Die WO 2010 069 659 A2 offenbart ein Verfahren zur Steuerung einer Bremsbetätigung einer hydraulischen Fahrzeugbremsanlage eines Hybridfahrzeugs, das durch Generatorbetrieb eines Elektro-Antriebsmotors bremsbar ist. Zum Ausgleich der Bremswirkung des Elektro-Antriebsmotors schlägt die Erfindung vor, einen Radbremsdruck in den Radbremsen der Fahrzeugräder durch Öffnen von Bremsdruckabsenkventilen zu verringern, die mit dem Elektro-Antriebsmotor gebremst werden.

### Offenbarung der Erfindung

Die Erfindung schafft ein Verfahren zum Betreiben eines Bremssystems eines Fahrzeugs mit den Merkmalen des Anspruchs 1, eine Steuervorrichtung für ein Bremssystem eines Fahrzeugs mit den Merkmalen des Anspruchs 10 und ein Bremssystem für ein Fahrzeug mit den Merkmalen des Anspruchs 11.

### Vorteile der Erfindung

Die vorliegende Erfindung ermöglicht das Einstellen eines Bremsdrucks unter einem Ansprechdruck des Speichervolumens des mindestens einen Bremskreises trotz der Betätigung des an dem Hauptbremszylinder angeordneten/angebundenen Bremsbetätigungselements. Somit ist trotz des direkten Einbremsens des Fahrers in den Hauptbremszylinder ein Bremsdruckaufbau in dem mindestens einen Bremskreis verlässlich verhinderbar/unterbindbar. Insbesondere kann trotz der erfolgten Betätigung des Bremsbetätigungselements, wie beispielsweise eines Bremspedals, ein Bremsdruck von (nahezu) Null in den allen Bremskreisen eingehalten werden.

Bei einem Ausführen der vorliegenden Erfindung verbleiben keine Restschleifmomente, welche herkömmlicher Weise bei einem Verblenden entsprechend der Ansprechkraft/Federkraft eines Speichervolumens auftreten. Stattdessen können die Bremsdrücke an beiden Achsen bis auf (nahezu) 0 bar abgebaut werden. Durch das zusätzliche Reduzieren des Bremsdrucks zumindest in dem mindestens einen Bremskreis unter den Ansprechdruck des Speichervolumens des mindestens einen Bremskreises kann ein Verschleiß der Bremsbeläge reduziert werden. Damit trägt die vorliegende Erfindung zum Schonen der Bremsbeläge bei.

Das erfindungsgemäße Verfahren und die entsprechende Steuervorrichtung sind besonders für ein rekuperatives Bremssystem vorteilhaft. Durch die Verwendung der vorliegenden Erfindung für ein rekuperatives Bremssystem können während einer Rekuperation die Rekuperationseffizienz gesteigert und eine Fahrzeugbatterie somit schneller aufgeladen werden. Somit gewährleistet die vorliegende Erfindung ein Fahren eines Fahrzeugs bei einem niedrigeren Energieverbrauch und einer reduzierten Schadstoffemission. Es wird jedoch darauf hingewiesen, dass die Verwendbarkeit der vorliegenden Erfindung nicht auf rekuperative Bremssysteme limitiert ist.

In einer vorteilhaften Ausführungsform wird der Bremskraftverstärker derart angesteuert, dass eine mittels des Bremskraftverstärkers auf mindestens einen Kolben des Hauptbremszylinders ausgeübte Verstärkerkraft, welche eine durch die Betätigung des Bremsbetätigungselements auf den mindestens einen Kolben des Hauptbremszylinders ausgeübte Kraft verstärkt, zum Reduzieren des Innendrucks reduziert wird. Auf diese Weise kann zusätzlich Energie eingespart werden, die andernfalls von dem Bremskraftverstärker verbraucht würde.

In einer alternativen Ausführungsform kann der Bremskraftverstärker derart angesteuert werden, dass mittels des angesteuerten Bremskraftverstärkers eine Gegenkraft zu der durch die Betätigung des Bremsbetätigungselements auf den mindestens einen Kolben des Hauptbremszylinders ausgeübten Kraft ausgeübt wird. Damit kann die vorliegende Erfindung bei einer entsprechenden Auslegung des Bremskraftverstärkers auch dann ausgeführt werden, wenn das Betätigen des Bremsbetätigungselements durch den Fahrer nicht mittels des Bremskraftverstärkers unterstützt wird.

Vorzugsweise wird während des Begrenzens des Druckaufbaus in dem mindestens einen Bremskreis auf den Ansprechdruck und/oder während des zusätzlichen Reduzierens des Bremsdrucks in dem mindestens einen Bremskreis unter den Ansprechdruck mindestens ein erstes Radeinlassventil des mindestens einen ersten Radbremszylinders in einen geöffneten Zustand gesteuert, und mindestens ein zweites Radeinlassventil mindestens eines zweiten Radbremszylinders des mindestens einen Bremskreises wird in einen geschlossenen Zustand gesteuert. Somit kann lediglich über einen der beiden Radbremszylinder verblendet werden. Auf diese Weise ist verhinderbar, dass insbesondere während des Begrenzens des Druckaufbaus in dem mindestens einen Bremskreis auf den Ansprechdruck in dem mindestens einen zweiten Radbremszylinder ein Druck entsprechend dem Ansprechdruck des Speichervolumens des mindestens einen Bremskreises aufgebaut wird. Dies gewährleistet eine zusätzliche Schonung des mindestens einen zweiten Radbremszylinders.

In einer vorteilhaften Weiterbildung wird vor dem Begrenzen des Druckaufbaus in dem mindestens einen Bremskreis auf den Ansprechdruck und/oder vor dem zusätzlichen Reduzieren des Bremsdrucks in dem mindestens einen Bremskreis unter den Ansprechdruck ermittelt, ob ein der Betätigungsstärke der Betätigung des Bremsbetätigungselements entsprechendes Generator-Bremsmoment mittels mindestens eines Elektromotors des Fahrzeugs ausübbar ist, und das Begrenzen des Druckaufbaus in dem mindestens einen Bremskreis auf den Ansprechdruck und/oder das zusätzliche Reduzieren des Bremsdrucks in dem mindestens einen Bremskreis unter den Ansprechdruck wird nur ausgeführt, sofern das der Betätigungsstärke entsprechende Generator-Bremsmoment mittels des mindestens einen Elektromotors ausübbar ist. Der gegenüber dem Stand der Technik reduzierte Bremsdruck in dem mindestens einen Bremskreis kann somit dazu genutzt werden, ein vergleichsweise großes Generator-Bremsmoment auf das Fahrzeug auszuüben, ohne dass ein von dem Fahrer vorgegebenes Soll-Gesamt-Bremsmoment überschritten wird. Das vorteilhafte Verfahren ermöglicht somit beispielsweise ein schnelleres Aufladen einer Fahrzeugbatterie.

Bevorzugter Weise wird, sofern nach dem Begrenzen des Druckaufbaus in dem mindestens einen Bremskreis auf den Ansprechdruck und/oder nach dem zusätzlichen Reduzieren des Bremsdrucks in dem mindestens einen Bremskreis unter den Ansprechdruck ermittelt wird, dass das der Betätigungsstärke entsprechende Generator-Bremsmoment mittels des mindestens einen Elektromotors nicht mehr ausübbar ist, das mindestens eine zweite Radeinlassventil des mindestens einen zweiten Radbremszylinders aus dem geschlossenen Zustand in einen geöffneten Zustand gesteuert. Auf diese Weise kann mittels eines Aufbaus eines Bremsdrucks in dem zweiten Radbremszylinder schnell und verlässlich auf eine reduzierte Einsetzbarkeit des mindestens einen Elektromotors und/oder auf einen vergleichsweise hohen Fahrerbremswunsch reagiert werden.

Gegebenenfalls kann nach einem Steuern des mindestens einen zweiten Radeinlassventils aus dem geschlossenen Zustand in den geöffneten Zustand eine Δp-Regelung mittels des mindestens einen ersten Radeinlassventils des mindestens einen ersten Radbremszylinders ausgeführt werden. Auf diese Weise kann der Bremsdruck in dem mindestens einen Bremskreis (nahezu) exakt so eingeregelt werden, dass eine von dem Fahrer vorgegebene Soll-Fahrzeugverzögerung verlässlich einhaltbar ist.

Außerdem kann, sofern nach dem Steuern des mindestens einen zweiten Radeinlassventils aus dem geschlossenen Zustand in den geöffneten Zustand ermittelt wird, dass das der Betätigungsstärke entsprechende Generator-Bremsmoment mittels des mindestens einen Elektromotors erneut ausübbar ist, der in dem mindestens einen Bremskreis vorliegende Bremsdruck begrenzt werden, indem das mindestens eine erste Radeinlassventil und das mindestens eine erste Radauslassventil in den geöffneten Zustand gesteuert werden. Auf diese Weise kann der in dem mindestens einen Bremskreis vorliegende Bremsdruck verlässlich so abgebaut werden, dass der mindestens eine Elektromotor zum Aufladen einer Fahrzeugbatterie nutzbar ist, ohne dass dabei eine von dem Fahrer vorgegebene Soll-Fahrzeugverzögerung überschritten wird.

Des Weiteren kann zum erneuten zusätzlichen Reduzieren des Bremsdrucks in dem mindestens einen Bremskreis unter den Ansprechdruck während einer abnehmenden Betätigungsstärke der Betätigung des Bremsbetätigungselements das mindestens eine erste Radauslassventil des mindestens einen ersten Radbremszylinders in den geschlossenen Zustand gesteuert werden, und der Bremskraftverstärker kann so angesteuert werden, dass mittels des angesteuerten Bremskraftverstärkers der in dem Hauptbremszylinder vorliegender Innendruck erneut reduziert wird. Somit kann auch in einer derartigen Situation der in dem mindestens einen Bremskreis vorliegende Bremsdruck unter den Ansprechdruck reduziert werden.

Die oben aufgezählten Vorteile sind auch bei einer derartigen Steuervorrichtung für ein Bremssystem eines Fahrzeugs gewährleistet. Es wird ausdrücklich darauf hingewiesen, dass die Steuervorrichtung entsprechend der Ausführungsformen des Verfahrens zum Betreiben eines Bremssystems eines Fahrzeugs weiterbildbar ist.

Außerdem sind die beschriebenen Vorteile gewährleistet bei einem Bremssystem für ein Fahrzeug mit einer derartigen Steuervorrichtung.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform der Steuervorrichtung; und
- Fig. 2a bis 2d: vier Koordinatensysteme zum Darstellen einer Ausführungsform des Verfahrens zum Betreiben eines Bremssystems eines Fahrzeugs.

### Ausführungsformen der Erfindung

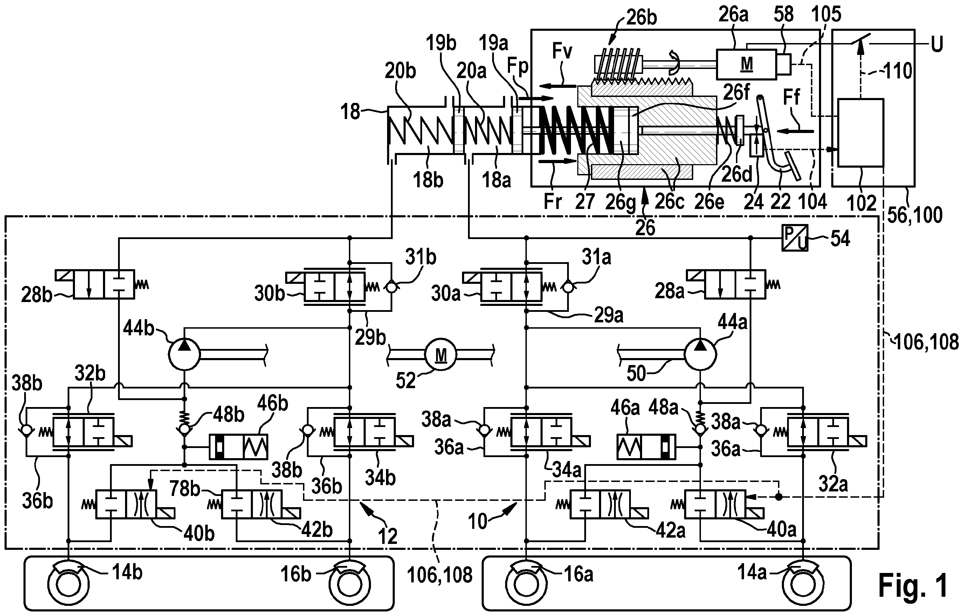

Fig. 1 zeigt eine schematische Darstellung einer Ausführungsform der Steuervorrichtung.

Die in Fig. 1 schematisch wiedergegebene Steuervorrichtung 100 und das damit zusammenwirkende Bremssystem sind beispielsweise in einem Hybrid- oder in einem Elektrofahrzeug vorteilhaft einsetzbar. Die Einsetzbarkeit der Steuervorrichtung 100 und des im Weiteren beschriebenen Bremssystems ist jedoch nicht auf die Verwendung in einem Hybrid- oder in einem Elektrofahrzeug beschränkt.

Das Bremssystem hat einen ersten Bremskreis 10 und einen zweiten Bremskreis 12 mit jeweils mindestens einem Radbremszylinder 14a, 14b, 16a und 16b. Optionaler Weise weist jeder der beiden Bremskreise 10 und 12 einen ersten Radbremszylinder 14a oder 14b und einen zweiten Radbremszylinder 16a und 16b auf. Bevorzugter Weise sind in diesem Fall der erste Radbremszylinder 14a des ersten Bremskreises 10 und der zweite Radbremszylinder 16a des ersten Bremskreises 10 unterschiedlichen Fahrzeugachsen zugeordnet, wobei auch der erste Radbremszylinder 14b des zweiten Bremskreises 12 und der zweite Radbremszylinder 16b des zweiten Bremskreises 12 verschiedenen Fahrzeugachsen zugeordnet sind. Insbesondere können die ersten Radbremszylinder 14a und 14b der Hinterachse zugeordnet sein, während die zweiten Radbremszylinder 16a und 16b der Vorderachse zugeordnet sind. Das im Weiteren beschriebene Bremssystem ist jedoch nicht auf eine derartige Bremskreisaufteilung (X-Bremskreisaufteilung) beschränkt. Die einem Bremskreis 10 und 12 zugeordneten Räder können beispielsweise auch an einer gemeinsamen Achse des Fahrzeugs oder auf einer Seite des Fahrzeugs angeordnet sein.

Das Bremssystem weist einen Hauptbremszylinder 18 auf, welcher beispielsweise als Tandemhauptbremszylinder ausführbar ist. Der Hauptbremszylinder 18 kann mindestens einen verstellbaren Kolben 19a und 19b haben, welcher zumindest teilweise in mindestens eine Druckkammer 18a oder 18b des Hauptbremszylinders 18 verstellbar ist. Bevorzugter Weise umfasst der Hauptbremszylinder 18 einen als Stangenkolben bezeichenbaren ersten verstellbaren Kolben 19a, welcher zumindest teilweise in eine dem ersten Bremskreis 10 zugeordnete erste Druckkammer 18a des Hauptbremszylinders 18 (mit einer ersten Rückstellfeder 20a) hineinragt, und einen als Schwimmkolben bezeichenbaren zweiten verstellbaren Kolben 19b, der zumindest teilweise in eine dem zweiten Bremskreis 12 zugeordnete zweite Druckkammer 18b des Hauptbremszylinders 18 (mit einer zweiten Rückstellfeder 20b) hineinragt. Der Hauptbremszylinder 18 kann über mindestens eine Bremsflüssigkeit-Austauschöffnung, wie beispielsweise eine Schnüffelbohrung, mit einem (nicht skizzierten) Bremsflüssigkeitsreservoir verbunden sein. Die Einsetzbarkeit der Steuervorrichtung 100 ist jedoch nicht auf die Verwendung eines Tandemhauptbremszylinders oder auf eine bestimmte Ausbildung des Hauptbremszylinders 18 beschränkt.

Das Bremssystem weist vorzugsweise ein an dem Hauptbremszylinder 18 angeordnetes Bremsbetätigungselement 22, wie beispielsweise ein Bremspedal, auf. Vorteilhafterweise ist das Bremsbetätigungselement 22 derart an dem Hauptbremszylinder 18 angeordnet, dass bei einem Betätigen des Bremsbetätigungselements 22 mit zumindest einer Mindest-Bremsbetätigungsstärke eine auf das Bremsbetätigungselement 22 aufgebrachte Fahrerbremskraft Ff auf den mindestens einen verstellbaren Kolben 19a und 19b, wie beispielsweise auf den Stangenkolben und den Schwimmkolben, so übertragbar ist, dass der mindestens eine Kolben 19a und 19b mittels der Fahrerbremskraft Ff verstellbar ist. Mittels dieses Verstellens des mindestens einen Kolbens 19a und 19b kann ein Innendruck in mindestens einer Druckkammer 18a und 18b des Hauptbremszylinders 18 gesteigert werden.

Bevorzugter Weise umfasst das Bremssystem auch mindestens einen Bremsbetätigungselement-Sensor 24, mittels welchem die Betätigungsstärke der Betätigung des Bremsbetätigungselements 22 durch den Fahrer ermittelbar ist. Der mindestens eine Bremsbetätigungselement-Sensor 24 kann beispielsweise ein Pedalwegsensor, ein Differenzwegsensor und/oder ein Stangenwegsensor sein. Zur Erfassung der Betätigungsstärke, welche dem Fahrerbremswunsch entspricht, ist jedoch auch eine anders geartete Sensorik anstelle oder zusätzlich zu den hier aufgezählten Sensortypen einsetzbar.

Das dargestellte Bremssystem weist auch einen Bremskraftverstärker 26 auf. Mittels des Bremskraftverstärkers 26 kann eine Verstärkerkraft Fv so auf den mindestens einen Kolben 19a und 19b des Hauptbremszylinders 18 ausgeübt werden, dass dem Fahrer die Betätigung des Bremsbetätigungselements 22 erleichtert wird. Die Verstärkerkraft Fv wirkt in diesem Fall zusammen mit der Fahrerbremskraft Ff einer Rückstellkraft Fr einer Rückstellfeder 27 und einer durch den Innendruck in mindestens einer Druckkammer 18a und 18b des Hauptbremszylinders 18 bewirkten Druckkraft Fp entgegen.

Der Bremskraftverstärker 26 kann insbesondere ein stetig regelbarer/stetig steuerbarer Bremskraftverstärker 26 sein. Das in Fig. 1 dargestellte Bremssystem weist einen elektromechanischen Bremskraftverstärker 26 auf. Ein elektromechanischer Bremskraftverstärker 26 zeichnet sich durch eine variable Verstärkerkraft Fv aus. Der Bremskraftverstärker 26 der Fig. 1 umfasst einen Motor 26a, ein Getriebe 26b, einen Verstärkerkörper 26c (Booster), eine Eingangsstange 26d, eine Differenzweg-Feder 26e, eine Reaktionsscheibe 26f und eine Ausgangstange 26g. Damit ist es mittels des elektromechanischen Bremskraftverstärkers 26 möglich, die für den Fahrer wahrnehmbare Bremsbetätigungskraft während eines Bremsens auf einfache Weise zu beeinflussen. Anstelle eines elektromechanischen Bremskraftverstärkers 26 kann das mit der Steuervorrichtung 100 zusammenwirkende Bremssystem jedoch auch einen Bremskraftverstärker 26 eines anderen Typs haben.

Nachfolgend werden mit Bezug zu Fig. 1 weitere Komponenten der Ausführungsform des Bremssystems beschrieben. Es wird ausdrücklich darauf hingewiesen, dass die im Weiteren beschriebenen Komponenten des Bremssystems lediglich ein Beispiel für eine mögliche Ausbildung des vorteilhaften Bremssystems darstellen. Ein Vorteil der unten ausführlicher beschriebenen Steuervorrichtung 100 liegt darin, dass die damit zusammenwirkenden Bremskreise 10 und 12 nicht auf eine bestimmte Ausbildung oder auf das Einsetzen bestimmter Komponenten festgelegt sind. Stattdessen können die Bremskreise 10 und 12 mit einer hohen Wahlfreiheit modifiziert werden, ohne dass die Einsetzbarkeit und die Vorteile der Steuervorrichtung 100 beeinträchtigt werden:
Jeder der Bremskreise 10 und 12 ist so ausgebildet, dass der Fahrer über den Hauptbremszylinder 18 direkt in die Radbremszylinder 14a, 14b, 16a und 16b hineinbremsen kann. Jeder der Bremskreise 10 und 12 weist ein Hochdruckschaltventil 28a oder 28b und ein Umschaltventil 30a oder 30b (mit jeweils einer parallel dazu verlaufenden Bypassleitung 29a und 29b und einem in jeder Bypassleitung 29a und 29b angeordneten Rückschlagventil 31 a und 31 b) auf. In dem ersten Bremskreis 10 sind dem ersten Radbremszylinder 14a ein erstes Radeinlassventil 32a und dem zweiten Radbremszylinder 16a ein zweites Radeinlassventil 34a, jeweils mit einer parallel dazu verlaufenden Bypassleitung 36a und einem in jeder Bypassleitung 36a angeordneten Rückschlagventil 38a zugeordnet. Zusätzlich sind in dem ersten Bremskreis 10 ein erstes Radauslassventil 40a dem ersten Radbremszylinder 14a und ein zweites Radauslassventil 42a dem zweiten Radbremszylinder 16a zugeordnet. Entsprechend sind auch in dem zweiten Bremskreis 12 ein erstes Radeinlassventil 32b dem ersten Radbremszylinder 14b und ein zweites Radeinlassventil 34b dem zweiten Radbremszylinder 16b zugeordnet. Parallel zu jedem der beiden Radeinlassventile 32b und 34b des zweiten Bremskreises 12 verläuft jeweils eine Bypassleitung 36b mit je einem darin angeordneten Rückschlagventil 38b. Des Weiteren sind auch in dem zweiten Bremskreis 12 ein erstes Radauslassventil 40b dem ersten Radbremszylinder 14b und ein zweites Radauslassventil 42b dem zweiten Radbremszylinder 16b zugeordnet.

Außerdem umfasst jeder der Bremskreise 10 und 12 eine Pumpe 44a und 44b, deren Ansaugseite mit den Radauslassventilen 40a und 42a oder 40b und 42b verbunden ist und deren Förderseite zu den Radeinlassventilen 32a und 34a oder 32b und 34b gerichtet ist. Jeder der Bremskreise 10 und 12 weist zusätzlich noch eine zwischen den Radauslassventilen 40a und 42a oder 40b und 42b und der zugeordneten Pumpe 44a oder 44b angeordnete Speicherkammer 46a oder 46b als Speichervolumen 46a oder 46b und ein zwischen der jeweiligen Pumpe 44a oder 44b und der Speicherkammer 46a oder 46b liegendes Überdruckventil 48a oder 48b auf. Jede der Speicherkammern 46a und 46b kann insbesondere eine Niederdruckspeicherkammer sein. Es wird darauf hingewiesen, dass die Speicherkammern 46a und 46b als ESP-Speicherkammern in beiden Bremskreisen 10 und 12 nutzbar sind.

Die Pumpen 44a und 44b können auf einer gemeinsamen Welle 50 eines Motors 52 angeordnet sein. Jede der Pumpen 44a und 44b kann als Drei-Kolben-Pumpen ausgebildet sein. Anstelle von einer Drei-Kolben-Pumpe kann jedoch auch ein anderer Pumpentyp für mindestens eine der Pumpen 44a und 44b verwendet werden. Anders ausgeführte Modulationssysteme, wie z. B. Pumpen mit mehreren oder weniger Kolben, asymmetrische Pumpen oder Zahnradpumpen, sind ebenfalls einsetzbar. Das mit der Steuervorrichtung 100 zusammenwirkende Bremssystem ist somit als ein modifiziertes Standard-Modulationssystem, insbesondere als Sechs-Kolben-ESP-System, ausführbar.

Außerdem kann jeder der beiden Bremskreise 10 und 12 noch mindestens einen Drucksensor 54, insbesondere zum Ermitteln eines Vordrucks und/oder eines Kreisdrucks, umfassen.

Das oben beschriebene Bremssystem ist mittels der im Weiteren ausgeführten Steuervorrichtung 100 ansteuerbar. Es wird jedoch nochmals darauf hingewiesen, dass die Einsetzbarkeit der im Weiteren beschriebenen Steuervorrichtung 100 nicht auf das Zusammenwirken mit einem derart ausgebildeten Bremssystem limitiert ist. Die im Weiteren beschriebene Steuervorrichtung 100 kann insbesondere in eine Steuerelektronik 56 des Bremskraftverstärkers 26 oder in eine Steuerelektronik des Bremssystems integriert sein. Es wird jedoch darauf hingewiesen, dass die Ausbildbarkeit der Steuervorrichtung 100 nicht auf eine derartige Integration limitiert ist. Beispielsweise kann die Steuervorrichtung 100 auch zusammen mit einer getrennt davon ausgebildeten und angeordneten Steuerelektronik 56 des Bremskraftverstärkers 26 und/oder Steuerelektronik des Bremssystems eingesetzt werden.

Die Steuervorrichtung 100 umfasst eine Ansteuereinrichtung 102, mittels welcher mindestens ein erstes Radauslassventil 40a und 40b mindestens eines ersten Radbremszylinders 14a und 14b mindestens eines der Bremskreise 10 und 12 ansteuerbar ist. Das Ansteuern zumindest des mindestens einen ersten Radauslassventils 40a und 40b durch die Ansteuereinrichtung 102 erfolgt unter Berücksichtigung zumindest eines bereitgestellten Sensorsignals 104 bezüglich einer Betätigungsstärke einer Betätigung des an dem Hauptbremszylinder 18 angeordneten Bremsbetätigungselements 22 durch einen Fahrer des Fahrzeugs. Beispielsweise kann der Bremsbetätigungselement-Sensor 24 als Sensorsignal 104 einen Pedalweg, einen Stangenweg, einen Fahrerbremsdruck und/oder die Fahrerbremskraft Ff, bzw. eine entsprechende Größe, an die Ansteuereinrichtung 102 bereitstellen. Wahlweise kann auch ein Signal 105 eines Sensors 58 des Bremskraftverstärkers 26, wie z.B. eines Drehwinkelsensors, von der Ansteuereinrichtung 102 berücksichtigbar sein. Optionaler Weise kann noch mindestens eine Information bezüglich eines mittels mindestens eines (nicht dargestellten) generatorisch betreibbaren Elektromotors des Bremssystems maximal ausführbaren Generator-Bremsmoments an die Ansteuereinrichtung 102 bereitstellbar und mittels dieser auswertbar sein.

Die Ansteuereinrichtung 102 ist dazu ausgelegt, mindestens ein erstes Radauslassventil 40a und 40b der Bremskreise 10 und 12 so anzusteuern, dass ein Bremsdruckaufbau zumindest in einem der beiden Bremskreise 10 und 12 auf einem Ansprechdruck des Speichervolumens/der Speicherkammer 46a und 46b des jeweiligen Bremskreises 10 und 12 (trotz einer aus dem Hauptbremszylinder des Bremssystems in die Bremskreise 10 und 12 verschobenen Bremsflüssigkeit) begrenzbar ist. Dazu gibt die Ansteuereinrichtung 102 (zumindest zeitweise) während einer zunehmenden Betätigungsstärke der Betätigung des Bremsbetätigungselements 22 ein erstes Steuersignal 106 an das mindestens eine erste Radauslassventil 40a und 40b aus.

Außerdem ist mittels der Ansteuereinrichtung 102 zusätzlich der Bremskraftverstärker 26 unter Berücksichtigung zumindest des bereitgestellten Sensorsignals 104 so ansteuerbar, dass, nachdem das mindestens eine erste Radauslassventil 40a und 40b mittels der Ansteuereinrichtung 102 durch ein zweites Steuersignal 108 in einem geschlossenen Zustand gesteuert ist, ein in dem Hauptbremszylinder 18 vorliegender Innendruck mittels des angesteuerten Bremskraftverstärkers 26 reduzierbar ist. Insbesondere ist der Innendruck in dem Hauptbremszylinder 18 mittels des durch ein weiteres Steuersignal 110 angesteuerten Bremskraftverstärkers 26 derart reduzierbar, dass der Bremsdruck in mindestens einem Bremskreis 10 und 12 zusätzlich unter den Ansprechdruck reduzierbar ist. Beispielsweise kann eine Versorgungsspannung U des Bremskraftverstärkers 26 mittels des weiteren Steuersignals 110 variierbar sein.

Die Reduzierung des Innendrucks in dem Hauptbremszylinder 18 bewirkt eine Bremsflüssigkeitsverschiebung (aus den Bremskreisen 10 und 12 in den Hauptbremszylinder 18), wodurch der in den Bremskreisen 10 und 12 vorliegende Druck zusätzlich unter den Ansprechdruck der als Speichervolumen 46a und 46b der Bremskreise 10 und 12 genutzten Speicherkammern 46a und 46b reduzierbar ist. Auf diese Weise ist auch der in den ersten Radbremszylindern 40a und 40b, über welche (zumindest zeitweise) während einer zunehmenden Betätigungsstärke der Betätigung des Bremsbetätigungselements 22 Bremsflüssigkeit verschoben wird, und deren erste Radeinlassventile 32a und 32b deshalb geöffnet vorliegen, vorliegende Bremsdruck reduzierbar. Durch das bewirkte Reduzieren des Bremsdrucks in den ersten Radbremszylindern 40a und 40b kann ein Verschleiß von deren Bremsbelägen verhindert/hinausgezögert werden. Damit kann die Steuervorrichtung 100 auch zum Schonen der Bremsbeläge eingesetzt werden.

Die in den Bremskreisen 10 und 12 bewirkte Bremsdruckreduzierung unter den Ansprechdruck der als Speichervolumen 46a und 46b der Bremskreise 10 und 12 genutzten Speicherkammern 46a und 46b kann für eine Steigerung eines mittels des (nicht skizzierten) mindestens einen Elektromotors ausgeführten Generator-Bremsmoments genutzt werden. Somit kann eine Batterie des mit dem Bremssystem ausgestatteten Fahrzeugs schneller aufgeladen werden, ohne dass dabei eine von einem Fahrer mittels einer Betätigung des Bremsbetätigungselements 22 vorgegebene Fahrzeugverzögerung überschritten wird.

Das mit der Steuervorrichtung 100 ausgestattete Bremssystem vereint somit die Vorteile einer hohen Rekuperationseffizienz mit der Ausführbarkeit einer Verblendung. Außerdem ist es mittels des Einsetzens der Steuervorrichtung 100 möglich, die Verblendung ohne für den Fahrer spürbare Rückwirkungen am Bremsbetätigungselement 22 auszuführen.

Es wird ausdrücklich darauf hingewiesen, dass die oben beschriebenen Vorteile unabhängig von einer Höhe des Ansprechdrucks der als Speichervolumen 46a und 46b der Bremskreise 10 und 12 genutzten Speicherkammern 46a und 46b auftreten. Der Ansprechdruck der Speichervolumen 46a und 46b der Bremskreise 10 und 12 kann somit auch vergleichsweise hoch sein. Somit können auch konstengünstige Speichervolumen 46a und 46b zusammen mit der Steuervorrichtung 100 eingesetzt werden.

Außerdem kann die Steuervorrichtung 100 zusätzlich dazu ausgelegt sein, die im Weiteren beschriebenen Verfahrensschritte auszuführen. Auf eine genauere Beschreibung weiterer realisierbarer Funktionsweisen der Steuervorrichtung 100 wird deshalb hier verzichtet.

Die oben beschriebenen Vorteile sind auch bei einem Bremssystem für ein Fahrzeug mit der Steuervorrichtung 100, bzw. mit einer entsprechenden Weiterbildung der Steuervorrichtung 100, realisiert.

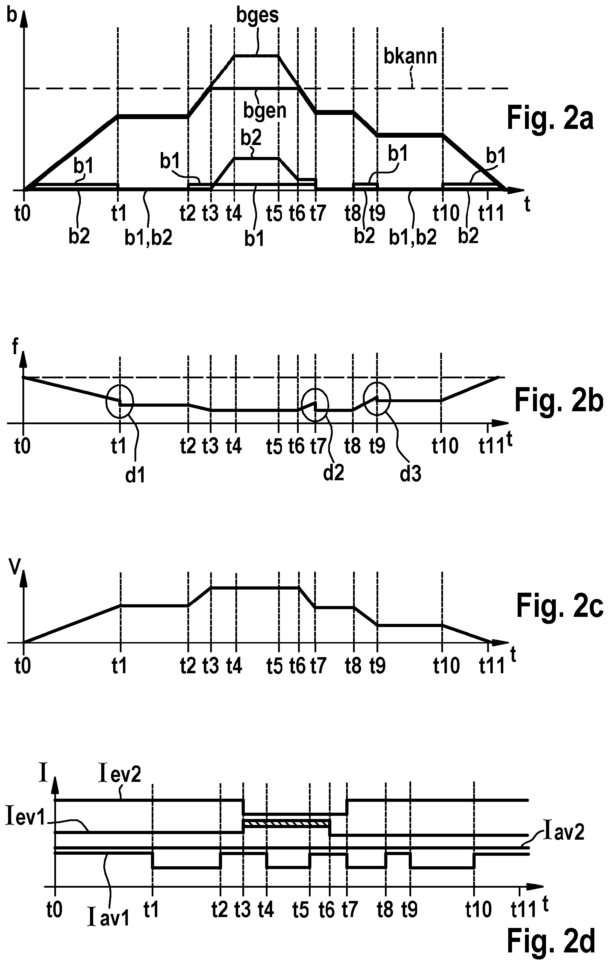

Fig. 2a bis 2d zeigen vier Koordinatensysteme zum Darstellen einer Ausführungsform des Verfahrens zum Betreiben eines Bremssystems eines Fahrzeugs.

Der besseren Anschaulichkeit wegen wird das Verfahren unter Verwendung des oben beschriebenen rekuperativen Bremssystems erläutert, wobei die ersten Radbremszylinder beider Bremskreise einer Hinterachse und die zweiten Radbremszylinder der beiden Bremskreise einer Vorderachse des Fahrzeugs zugeordnet sind. Die Ausführbarkeit des Verfahrens ist jedoch nicht auf die Verwendung des oben beschriebenen Bremssystems oder auf diese Zuordnung der Radbremszylinder limitiert.

Bei den Koordinatensystemen der Fig. 2a bis 2d ist die Abszisse die Zeitachse t. Die Ordinate des Koordinatensystems der Fig. 2a gibt ein Bremsmoment b wieder. Mittels der Ordinate der Fig. 2b ist ein Verhältnis f/ein Quotient zwischen einer von dem Fahrer auf das Bremsbetätigungselement ausgeübten Fahrerbremskraft und einer Verstärkerkraft des Bremskraftverstärkers wiedergegeben. Die Ordinate des Koordinatensystems der Fig. 2c ist ein Speichervolumen V, welches in den Speicherkammern/Speichervolumen der Bremskreise zwischengespeichert ist. Eine (normierte) Stromstärke I ist mittels der Ordinate des Koordinatensystems der Fig. 2d angezeigt.

Bis zu einem Zeitpunkt t0 übt der Fahrer keine Kraft auf das Bremsbetätigungselement aus. Somit liegt bis zum Zeitpunkt t0 das Bremsbetätigungselement des mittels des Verfahrens betriebenen Bremssystems in seiner Ausgangsstellung/Nicht-Betätigungstellung vor.

Ab dem Zeitpunkt t0 übt der Fahrer eine zunehmende Fahrerbremskraft auf das Bremsbetätigungselement aus, wodurch dieses verstellt wird. Zwischen den Zeiten t0 und t3 liegt das vom Fahrer angeforderte Soll-Gesamt-Bremsmoment bges jedoch unter einem mittels mindestens eines Elektromotors maximal ausführbaren Kann-Generator-Bremsmoment bkann. Somit kann zwischen den Zeiten t0 und t1 das (ausgeführte) Generator-Bremsmoment bgen entsprechend dem steigenden Soll-Gesamt-Bremsmoment bges eingestellt werden und der komplette Fahrerbremswunsch rein regenerativ ausgeführt werden.

Zum Ausführen des rein regenerativen Bremsens wird während der Zeiten t0 und t1 ein Bremsdruckaufbau in den Bremskreisen des Bremssystems (trotz der Betätigung des an dem Hauptbremszylinder des Bremssystems angeordneten Bremsbetätigungselements durch einen Fahrer des Fahrzeugs) auf einen Ansprechdruck der Speicherkammern/Speichervolumen der Bremskreise begrenzt. (Vorzugsweise wird vor dem Begrenzen des Druckaufbaus in den Bremskreisen auf den Ansprechdruck ermittelt, ob ein der Betätigungsstärke der Betätigung durch das Bremsbetätigungselement entsprechendes Generator-Bremsmoment bgen mittels des mindestens einen Elektromotors des Fahrzeugs ausübbar ist. Das Begrenzen des Druckaufbaus in den Bremskreisen auf den Ansprechdruck wird somit nur ausgeführt, sofern das der Betätigungsstärke entsprechende Generator-Bremsmoment mittels des mindestens einen Elektromotors ausübbar ist.)

Das Begrenzen des Druckaufbaus geschieht durch ein Steuern der ersten Radauslassventile der ersten Radbremszylinder der Bremskreise in einen geöffneten Zustand (zumindest zeitweise) während einer zunehmenden Betätigungsstärke einer Betätigung des an dem Hauptbremszylinder angebundenen Bremsbetätigungselements durch den Fahrer des Fahrzeugs. Bei einer Ausbildung der ersten Radauslassventile der ersten Radbremszylinder der Bremskreise als stromlos geschlossene Ventile wird dazu ein Steuersignal lav1 ungleich Null zwischen den Zeiten t0 und t1 (als erstes Steuersignal) an die ersten Radauslassventile ausgegeben.

Vorzugsweise werden während des Begrenzens des Druckaufbaus in den Bremskreisen auf den Ansprechdruck die ersten Radeinlassventile der ersten Radbremszylinder beider Bremskreise in einen geöffneten Zustand und die zweiten Radeinlassventile der zweiten Radbremszylinder beider Bremskreise in einen geschlossenen Zustand gesteuert. Zum Steuern der ersten Radeinlassventile der ersten Radbremszylinder in den geöffneten Zustand kann bei einer Ausbildung von diesen als stromlos offene Ventile ein Steuersignal lev1 gleich Null an die ersten Radeinlassventile der ersten Radbremszylinder ausgegeben werden. Bei einer Ausbildung der zweiten Radeinlassventile der zweiten Radbremszylinder als stromlos offene Ventile wird ein Steuersignal lev2 ungleich Null zwischen den Zeiten t0 und t1 an die zweiten Radeinlassventile bereitgestellt. Vorzugsweise sind auch die zweiten Radauslassventile der zweiten Radbremszylinder der beiden Bremskreise zwischen den Zeiten t0 und t1 geschlossen. Sofern die zweiten Radauslassventile der zweiten Radbremszylinder stromlos geschlossene Ventile sind, ist dies mittels eines Steuersignals lav2 gleich Null realisierbar.

Während der Zeiten t0 und t1 verschiebt der Fahrer somit ein Bremsflüssigkeitsvolumen aus dem Hauptbremszylinder in die Speicherkammern, wodurch das Speichervolumen V zunimmt. Somit liegt zwischen den Zeiten t0 und t1 in den ersten Radbremszylindern ein erster Bremsdruck gleich dem Ansprechdruck der Speicherkammern/Speichervolumen und in den zweiten Radbremszylindern ein zweiter Bremsdruck von (nahezu) Null vor. Die ersten Radbremszylinder bewirkten somit zwischen den Zeiten t0 und t1 ein erstes Bremsmoment b1 gleich einem "Ansprechdruck-Bremsmoment". Ein zweites Bremsmoment b2 der zweiten Radbremszylinder liegt zwischen den Zeiten t0 und t1 bei (nahezu) Null. Während der Zeiten t0 und t1 kann somit aufgrund des bewirkten Begrenzens des Druckaufbaus in den Bremskreisen ein vergleichsweise hohes Generator-Bremsmoment bgen mittels des mindestens einen Elektromotors auf das Fahrzeug ausgeübt werden. Trotz des Ausübens des Generator-Bremsmoments bgen ungleich Null ist aufgrund der zuvor beschriebenen Verfahrensschritte verlässlich gewährleistet, dass das von dem Fahrer mittels der Bremsbetätigung vorgegebene Soll-Gesamt-Bremsmoment bges nicht überschritten wird.

Trotz des Begrenzens des Druckaufbaus in den Bremskreisen kann auch zwischen den Zeiten t0 und t1 ein standartgemäßes Bremsbetätigungsgefühl (Pedalgefühl) durch ein Reduzieren des Verhältnisses f zwischen der ausgeübten Fahrerbremskraft und der Verstärkerkraft des Bremskraftverstärkers gewährleistet werden. Das hier beschriebene Verfahren bietet somit sowohl eine Kraft- als auch eine Volumenverblendung. Der Fahrer spürt deshalb nicht, ob rein regenerativ, rein hydraulisch oder regenerativ-hydraulisch gebremst wird.

Außerdem kann der Bremsdruck in den Bremskreisen zwischen den Zeiten t1 und t2 zusätzlich unter den Ansprechdruck der Speichervolumen der Bremskreise reduziert werden. Dies ist insbesondere während einer konstanten Betätigungsstärke der Betätigung des Bremsbetätigungselements verlässlich ausführbar. (Die konstante Betätigungsstärke kann mittels mindestens eines Bremsbetätigungselement-Sensors festgestellt werden.) Zum zusätzlichen Reduzieren werden die ersten Radauslassventile in einen geschlossenen Zustand gesteuert. Dies erfolgt z.B. durch ein an die ersten Radauslassventile der ersten Radbremszylinder ausgegebenes Steuersignal lav1 (als zweites Steuersignal) gleich Null. Anschließend wird der Bremskraftverstärker derart angesteuert, dass mittels des angesteuerten Bremskraftverstärkers ein in dem Hauptbremszylinder vorliegender Innendruck reduziert wird. Dies gewährleistet die oben schon beschriebene zusätzliche Reduzierung der Bremsdrücke in den ersten Radbremszylindern unter den Ansprechdruck der Speichervolumen. Außerdem kann auf diese Weise das erste Bremsmoment b1 auf (nahezu) Null reduziert werden.

Das zusätzliche Reduzieren des Bremsdrucks in den ersten Radbremszylindern unter den Ansprechdruck der Speichervolumen kann zur Steigerung der Effizienz während des Rekuperierens genutzt werden. Das vom Fahrer angeforderte Soll-Gesamt-Bremsmoment bges kann somit während der Zeiten t1 und t2 im Idealfall zu 100% als Generator-Bremsmoment bgen aufgebracht werden. (Vorzugsweise wird vor dem zusätzlichen Reduzieren des Bremsdrucks unter den Ansprechdruck ermittelt, ob ein der Betätigungsstärke entsprechendes Generator-Bremsmoment bgen ausübbar ist, und das zusätzliche Reduzieren des Bremsdrucks unter den Ansprechdruck nur ausgeführt, sofern das der Betätigungsstärke entsprechende Generator-Bremsmoment bgen tatsächlich ausübbar ist.) Außerdem trägt die zusätzliche Reduzierung des Bremsdrucks in den ersten Radbremszylindern unter den Ansprechdruck der Speichervolumen zu einer vorteilhaften Schonung der Bremsbeläge bei.

Bei dem hier beschriebenen Verfahren wird der Bremskraftverstärker ab einem Erkennen einer konstanten Betätigungsstärke der Betätigung des Bremsbetätigungselements derart angesteuert, dass die mittels des Bremskraftverstärkers auf mindestens einen Kolben des Hauptbremszylinders ausgeübte Verstärkerkraft, welche eine durch die Betätigung des Bremsbetätigungselements auf den mindestens einen Kolben des Hauptbremszylinders ausgeübte Kraft/Fahrerbremskraft verstärkt, zum Reduzieren des Innendrucks reduziert wird. Dazu wird (ungefähr) zum Zeitpunkt t1 das Verhältnis f um eine erste Differenz d1 reduziert. Beispielsweise kann der Bremskraftverstärker eine geringe Rückwärts-/Auswärtsbewegung des Ausgangskolbens von ungefähr 0,2mm bewirkten. Insbesondere sofern dies mit einem geringen Gradienten erfolgt, spürt der Fahrer keine Rückwirkung am Bremsbetätigungselement.

Als Alternative dazu kann der Bremskraftverstärker derart angesteuert werden, dass mittels des angesteuerten Bremskraftverstärkers eine Gegenkraft zu der durch die Betätigung des Bremsbetätigungselements auf den mindestens einen Kolben des Hauptbremszylinders ausgeübten Kraft ausgeübt wird. Somit kann auch in einer Situation, in welcher der Bremskraftverstärker keine Verstärkungskraft auf den mindestens einen Kolben bewirkt, der Innendruck in dem Hauptbremszylinder vorteilhaft reduziert werden.

Auch während des zusätzlichen Reduzierens des Bremsdrucks in dem mindestens einen Bremskreis unter den Ansprechdruck können mindestens ein erstes Radeinlassventil des ersten Radbremszylinders in einen geöffneten Zustand und mindestens ein zweites Radeinlassventil eines zweiten Radbremszylinders in einen geschlossenen Zustand gesteuert werden. Dies ist z.B. mittels des Steuersignals lev1 gleich Null und mittels des Steuersignals lev2 ungleich Null möglich. (Auch das Steuersignal lav2 kann gleich Null bleiben.)

Ab der Zeit t2 steigert der Fahrer die Betätigungsstärke erneut. Die ersten Radauslassventile werden deshalb wieder geöffnet (lav1 ungleich Null). Ungefähr zum Zeitpunkt t3 nähert sich das von dem Fahrer vorgegebene steigende Soll-Gesamt-Bremsmoment bges dem maximal ausführbaren Kann-Generator-Bremsmoment bkann an. Um den Fahrerbremswunsch trotz der weiteren Zunahme des Soll-Gesamt-Bremsmoments bges weiterhin verlässlich zu erfüllen, wird deshalb ab dem Zeitpunkt t3 ein zweites Bremsmoment b2 ungleich Null aufgebaut. Dazu werden, sobald nach dem Begrenzen des Druckaufbaus in den Bremskreisen auf den Ansprechdruck und/oder nach dem zusätzlichen Reduzieren des Bremsdrucks unter den Ansprechdruck ermittelt wird, dass das der Betätigungsstärke entsprechende Generator-Bremsmoment bgen mittels des mindestens einen Elektromotors nicht mehr ausübbar ist, die zweiten Radeinlassventile der zweiten Radbremszylinder (z.B. mittels eines Steuersignals lev2 gleich Null) aus dem geschlossenen Zustand in einen geöffneten Zustand gesteuert. Die zweiten Radauslassventile der zweiten Radbremszylinder bleiben geschlossen (z.B. bei einem Steuersignal lav2 gleich Null).

Vorzugsweise wird nach einem Steuern der zweiten Radeinlassventile aus dem geschlossenen Zustand in den geöffneten Zustand eine Ap-Regelung mittels der ersten Radeinlassventile der ersten Radbremszylinder ausgeführt. Auf diese Weise kann das von dem Fahrer vorgegebene Soll-Gesamt-Bremsmoment bges mittels des maximal ausführbaren Kann-Generator-Bremsmoments bkann und dem zweiten Bremsmoment b2 bei einer zunehmenden Betätigungsstärke (zwischen den Zeiten t3 und t4), bei einer konstanten Betätigungsstärke (zwischen den Zeiten t4 und t5) und bei einer abnehmenden Betätigungsstärke (zwischen den Zeiten t5 und t6) verlässlich eingehalten werden.

Zum Zeitpunkt t6 wird nach dem Steuern der zweiten Radeinlassventile aus dem geschlossenen Zustand in den geöffneten Zustand erkannt, dass das der Betätigungsstärke entsprechende Generator-Bremsmoment bgen mittels des mindestens einen Elektromotors erneut ausübbar ist. Ab dem Zeitpunkt t6 wird deshalb wieder rein regenerativ gebremst und der in den Bremskreisen vorliegende Bremsdruck begrenzt. Dies geschieht, indem die ersten Radeinlassventile und die ersten Radauslassventile in den geöffneten Zustand gesteuert werden.

Zwischen den Zeiten t7 und t8 wird während einer konstanten Betätigungsstärke der Betätigung des Bremsbetätigungselement ein durch das hydraulische Bremsen zwischen den Zeiten t3 bis t6 bewirkter Restbremsdruck abgebaut. Dazu werden zum erneuten zusätzlichen Reduzieren des Bremsdrucks in den Bremskreisen unter den Ansprechdruck während einer konstanten Betätigungsstärke der Betätigung des Bremsbetätigungselements die ersten Radauslassventile der ersten Radbremszylinder (z.B. mittels des Steuersignals lav1 gleich Null) in den geschlossenen Zustand gesteuert, und der Bremskraftverstärker so angesteuert, dass mittels des angesteuerten Bremskraftverstärkers der in dem Hauptbremszylinder vorliegender Innendruck erneut reduziert wird. (Die ersten Radeinlassventile der ersten Radbremszylinder liegen vorzugsweise bereits in dem geöffneten Zustand vor.) Optionaler Weise können auch die zweiten Radeinlassventile der zweiten Radbremszylinder(z.B. mittels des Steuersignals lev2 ungleich Null) in den geschlossenen Zustand gesteuert werden.

Zum Ansteuern des Bremskraftverstärkers kann das Verhältnis f um eine zweite Differenz d2 reduziert werden. Beispielsweise kann der Bremskraftverstärker diesmal eine etwas größere Rückwärts-/Auswärtsbewegung des Ausgangskolbens von ungefähr 0,4mm bewirkten. Der hier angegebene Zahlenwert ist jedoch nur beispielhaft zu interpretieren.

Während einer erneuten Reduzierung der Betätigungsstärke durch den Fahrer zwischen den Zeiten t8 und t9 werden die ersten Radauslassventile (z.B. mittels des Steuersignals lav1 ungleich Null) wieder geöffnet. Ab der Zeit t9 erfolgt erneut eine Phase einer konstanten Betätigungsstärke bis zu einer Zeit t10. Die ersten Radauslassventile der ersten Radbremszylinder werden deshalb zwischen den Zeiten t9 und t10 (z.B. mittels des Steuersignals lav1 gleich Null) geschlossen. Außerdem wird dem Bremskraftverstärker zu der Zeit t9 ein um eine dritte Differenz d3 reduziertes Verhältnis f vorgegeben. Ab der Zeit t10 nimmt die Betätigungsstärke wieder ab. Zu einer Zeit t11 beendet der Fahrer die Bremsbetätigung.

## Patentansprüche

1. Verfahren zum Betreiben eines Bremssystems eines Fahrzeugs mit dem Schritt:
Begrenzen eines Bremsdruckaufbaus in mindestens einem Bremskreis (10, 12) des Bremssystems auf einen Ansprechdruck eines Speichervolumens (46a, 46b) des mindestens einen Bremskreises (10, 12) durch Steuern mindestens eines ersten Radauslassventils (40a, 40b) mindestens eines ersten Radbremszylinders (14a, 14b) des mindestens einen Bremskreises (10, 12) in einen geöffneten Zustand zumindest zeitweise während einer zunehmenden Betätigungsstärke einer Betätigung eines an einem Hauptbremszylinder (18) des Bremssystems angebundenen Bremsbetätigungselements (22) durch einen Fahrer des Fahrzeugs;
wobei ein
Zusätzliches Reduzieren eines Bremsdrucks in dem mindestens einen Bremskreis (10, 12) unter den Ansprechdruck während einer konstanten Betätigungsstärke der Betätigung des Bremsbetätigungselements (22) durch die Schritte erfolgt:
Steuern des mindestens einen ersten Radauslassventils (40a, 40b) des mindestens einen ersten Radbremszylinders (14a, 14b) in einen geschlossenen Zustand; und
Ansteuern eines Bremskraftverstärkers (26) derart, dass mittels des angesteuerten Bremskraftverstärkers (26) ein in dem Hauptbremszylinder (18) vorliegender Innendruck reduziert wird.

2. Verfahren nach Anspruch 1, wobei der Bremskraftverstärker (26) derart angesteuert wird, dass eine mittels des Bremskraftverstärkers (26) auf mindestens einen Kolben (19a, 19b) des Hauptbremszylinders (18) ausgeübte Verstärkerkraft (Fv), welche eine durch die Betätigung des Bremsbetätigungselements (22) auf den mindestens einen Kolben (19a, 19b) des Hauptbremszylinders (18) ausgeübte Kraft (Ff) verstärkt, zum Reduzieren des Innendrucks reduziert wird.

3. Verfahren nach Anspruch 1, wobei der Bremskraftverstärker (26) derart angesteuert wird, dass mittels des angesteuerten Bremskraftverstärkers (26) eine Gegenkraft zu einer durch die Betätigung des Bremsbetätigungselements (22) auf mindestens einen Kolben (19a, 19b) des Hauptbremszylinders (18) ausgeübten Kraft (Ff) ausgeübt wird.

4. Verfahren nach einem der vorhergehenden Ansprüche, wobei während des Begrenzens des Druckaufbaus in dem mindestens einen Bremskreis (10, 12)auf den Ansprechdruck und/oder während des zusätzlichen Reduzierens des Bremsdrucks in dem mindestens einen Bremskreis (10, 12)unter den Ansprechdruck mindestens ein erstes Radeinlassventil (32a, 32b) des mindestens einen ersten Radbremszylinders (14a, 14b) in einen geöffneten Zustand gesteuert wird, und mindestens ein zweites Radeinlassventil (34a, 34b) mindestens eines zweiten Radbremszylinders (16a, 16b) des mindestens einen Bremskreises (10, 12) in einen geschlossenen Zustand gesteuert wird.

5. Verfahren nach einem der vorhergehenden Ansprüche, wobei vor dem Begrenzen des Druckaufbaus in dem mindestens einen Bremskreis (10, 12) auf den Ansprechdruck und/oder vor dem zusätzlichen Reduzieren des Bremsdrucks in dem mindestens einen Bremskreis (10, 12) unter den Ansprechdruck ermittelt wird, ob ein der Betätigungsstärke der Betätigung des Bremsbetätigungselements (22) entsprechendes Generator-Bremsmoment (bgen) mittels mindestens eines Elektromotors des Fahrzeugs ausübbar ist, und das Begrenzen des Druckaufbaus in dem mindestens einen Bremskreis (10, 12) auf den Ansprechdruck und/oder das zusätzliche Reduzieren des Bremsdrucks in dem mindestens einen Bremskreis (10, 12) unter den Ansprechdruck nur ausgeführt wird, sofern das der Betätigungsstärke entsprechende Generator-Bremsmoment (bgen) mittels des mindestens einen Elektromotors ausübbar ist.

6. Verfahren nach Anspruch 5, wobei, sofern nach dem Begrenzen des Druckaufbaus in dem mindestens einen Bremskreis (10, 12) auf den Ansprechdruck und/oder nach dem zusätzlichen Reduzieren des Bremsdrucks in dem mindestens einen Bremskreis (10, 12) unter den Ansprechdruck ermittelt wird, dass das der Betätigungsstärke entsprechende Generator-Bremsmoment (bgen) mittels des mindestens einen Elektromotors nicht mehr ausübbar ist, das mindestens eine zweite Radeinlassventil (34a, 34b) des mindestens einen zweiten Radbremszylinders (16a, 16b) aus dem geschlossenen Zustand in einen geöffneten Zustand gesteuert wird.

7. Verfahren nach Anspruch 6, wobei nach einem Steuern des mindestens einen zweiten Radeinlassventils (34a, 34b) aus dem geschlossenen Zustand in den geöffneten Zustand eine Δp-Regelung mittels des mindestens einen ersten Radeinlassventils (32a, 32b) des mindestens einen ersten Radbremszylinders (14a, 14b) ausgeführt wird.

8. Verfahren nach Anspruch 6 oder 7, wobei, sofern nach dem Steuern des mindestens einen zweiten Radeinlassventils (34a, 34b) aus dem geschlossenen Zustand in den geöffneten Zustand ermittelt wird, dass das der Betätigungsstärke entsprechende Generator-Bremsmoment (bgen) mittels des mindestens einen Elektromotors erneut ausübbar ist, der in dem mindestens einen Bremskreis (10, 12) vorliegende Bremsdruck begrenzt wird, indem das mindestens eine erste Radeinlassventil (32a, 32b) und das mindestens eine erste Radauslassventil (40a, 40b) in den geöffneten Zustand gesteuert werden.

9. Verfahren nach Anspruch 8, wobei zum erneuten zusätzlichen Reduzieren des Bremsdrucks in dem mindestens einen Bremskreis (10, 12) unter den Ansprechdruck während einer abnehmenden Betätigungsstärke der Betätigung des Bremsbetätigungselements (22) das mindestens eine erste Radauslassventil (40a, 40b) des mindestens einen ersten Radbremszylinders (14a, 14b) in den geschlossenen Zustand gesteuert wird, und der Bremskraftverstärker (26) so angesteuert wird, dass mittels des angesteuerten Bremskraftverstärkers (26) der in dem Hauptbremszylinder (18) vorliegender Innendruck erneut reduziert wird.

10. Steuervorrichtung (100) für ein Bremssystem eines Fahrzeugs mit:
einer Ansteuereinrichtung (102), mittels welcher mindestens ein erstes Radauslassventil (40a, 40b) mindestens eines ersten Radbremszylinders (14a, 14b) mindestens eines Bremskreises (10, 12) des Bremssystems unter Berücksichtigung zumindest eines bereitgestellten Sensorsignals (104) bezüglich einer Betätigungsstärke einer Betätigung eines an einem Hauptbremszylinder (18) des Bremssystems angebundenen Bremsbetätigungselements (22) durch einen Fahrer des Fahrzeugs in einen geöffneten Zustand so steuerbar ist, dass ein Bremsdruckaufbau in dem mindestens einen Bremskreis (10, 12) auf einen Ansprechdruck eines Speichervolumens (46a, 46b) des mindestens einen Bremskreises (10, 12) zumindest zeitweise während einer zunehmenden Betätigungsstärke der Betätigung des Bremsbetätigungselements (22) begrenzbar ist;
wobei
mittels der Ansteuereinrichtung (102) zusätzlich ein Bremskraftverstärker (26) unter Berücksichtigung zumindest des bereitgestellten Sensorsignals (104) so während einer konstanten Betätigungsstärke der Betätigung des Bremsbetätigungselements (22) ansteuerbar ist, dass, nachdem das mindestens eine erste Radauslassventil (40a, 40b) mittels der Ansteuereinrichtung (102) in einen geschlossenen Zustand gesteuert ist, ein in dem Hauptbremszylinder (18) vorliegender Innendruck mittels des angesteuerten Bremskraftverstärkers (26) derart reduzierbar ist, dass der Bremsdrucks in dem mindestens einen Bremskreis (10, 12) zusätzlich unter den Ansprechdruck reduzierbar ist.

11. Bremssystem für ein Fahrzeug mit einer Steuervorrichtung (100) nach Anspruch 10.

## Claims

1. Method for operating a brake system of a vehicle having the step:
limiting of a brake pressure build-up in at least one brake circuit (10, 12) of the brake system to a response pressure of an accumulator volume (46a, 46b) of the at least one brake circuit (10, 12) by way of controlling of at least one first wheel outlet valve (40a, 40b) of at least one first wheel brake cylinder (14a, 14b) of the at least one brake circuit (10, 12) into an open state at least temporarily during an increasing actuating magnitude of an actuation of a brake actuating element (22) by way of a driver of the vehicle, which brake actuating element (22) is attached to a brake master cylinder (18) of the brake system;
additional reducing of a brake pressure in the at least one brake circuit (10, 12) below the response pressure during a constant actuating magnitude of the actuation of the brake actuating element (22) taking place by way of the steps:
controlling of the at least one first wheel outlet valve (40a, 40b) of the at least one first wheel brake cylinder (14a, 14b) into a closed state; and
actuating of a brake booster (26) in such a way that an internal pressure which prevails in the brake master cylinder (18) is reduced by means of the actuated brake booster (26).

2. Method according to Claim 1, the brake booster (26) being actuated in such a way that a booster force (Fv) which is exerted on at least one piston (19a, 19b) of the brake master cylinder (18) by means of the brake booster (26) and boosts a force (Ff) which is exerted on the at least one piston (19a, 19b) of the brake master cylinder (18) by way of the actuation of the brake actuating element (22) is reduced in order to reduce the internal pressure.

3. Method according to Claim 1, the brake booster (26) being actuated in such a way that a counterforce to a force (Ff) which is exerted on at least one piston (19a, 19b) of the brake master cylinder (18) by way of the actuation of the brake actuating element (22) is exerted by means of the actuated brake booster (26).

4. Method according to one of the preceding claims, at least one first wheel inlet valve (32a, 32b) of the at least one first wheel brake cylinder (14a, 14b) being controlled into an open state during the limiting of the pressure build-up in the at least one brake circuit (10, 12) to the response pressure and/or during the additional reducing of the brake pressure in the at least one brake circuit (10, 12) below the response pressure, and at least one second wheel inlet valve (34a, 34b) of at least one second wheel brake cylinder (16a, 16b) of the at least one brake circuit (10, 12) being controlled into a closed state.

5. Method according to one of the preceding claims, it being determined, before the limiting of the pressure build-up in the at least one brake circuit (10, 12) to the response pressure and/or before the additional reducing of the brake pressure in the at least one brake circuit (10, 12) below the response pressure, whether a generator brake moment (bgen) which corresponds to the actuating magnitude of the actuation of the brake actuating element (22) can be exerted by means of at least one electric motor of the vehicle, and the limiting of the pressure build-up in the at least one brake circuit (10, 12) to the response pressure and/or the additional reducing of the brake pressure in the at least one brake circuit (10, 12) below the response pressure being carried out only if the generator brake moment (bgen) which corresponds to the actuating magnitude can be exerted by means of the at least one electric motor.

6. Method according to Claim 5, the at least one second wheel inlet valve (34a, 34b) of the at least one second wheel brake cylinder (16a, 16b) being controlled out of the closed state into an open state if, after the limiting of the pressure build-up in the at least one brake circuit (10, 12) to the response pressure and/or after the additional reducing of the brake pressure in the at least one brake circuit (10, 12) below the response pressure, it is determined that the generator brake moment (bgen) which corresponds to the actuating magnitude can no longer be exerted by means of the at least one electric motor.

7. Method according to Claim 6, a Δp regulation being carried out by means of the at least one first wheel inlet valve (32a, 32b) of the at least one first wheel brake cylinder (14a, 14b) after controlling of the at least one second wheel inlet valve (34a, 34b) out of the closed state into the open state.

8. Method according to Claim 6 or 7, the brake pressure which prevails in the at least one brake circuit (10, 12) being limited, by the at least one first wheel inlet valve (32a, 32b) and the at least one first wheel outlet valve (40a, 40b) being controlled into the open state, if, after the controlling of the at least one second wheel inlet valve (34a, 34b) out of the closed state into the open state, it is determined that the generator brake moment (bgen) which corresponds to the actuating magnitude can again be exerted by means of the at least one electric motor.

9. Method according to Claim 8, the at least one first wheel outlet valve (40a, 40b) of the at least one first wheel brake cylinder (14a, 14b) being controlled into the closed state for renewed additional reducing of the brake pressure in the at least one brake circuit (10, 12) below the response pressure during a decreasing actuating magnitude of the actuation of the brake actuating element (22), and the brake booster (26) being actuated in such a way that the internal pressure which prevails in the brake master cylinder (18) is again reduced by means of the actuated brake booster (26).

10. Control apparatus (100) for a brake system of a vehicle having:
an actuating device (102), by means of which at least one first wheel outlet valve (40a, 40b) of at least one first wheel brake cylinder (14a, 14b) of at least one brake circuit (10, 12) of the brake system can be controlled into an open state with consideration of at least one provided sensor signal (104) with regard to an actuating magnitude of an actuation of a brake actuating element (22) by way of a driver of the vehicle, which brake actuating element (22) is attached to a brake master cylinder (18) of the brake system, in such a way that a brake pressure build-up in the at least one brake circuit (10, 12) can be limited to a response pressure of an accumulator volume (46a, 46b) of the at least one brake circuit (10, 12) at least temporarily during an increasing actuating magnitude of the actuation of the brake actuating element (22);
it being possible, in addition, for a brake booster (26) to be actuated by means of the actuating device (102) with consideration of at least the provided sensor signal (104) during a constant actuating magnitude of the actuation of the brake actuating element (22), in such a way that, after the at least one first wheel outlet valve (40a, 40b) is controlled into a closed state by means of the actuating device (102), an internal pressure which prevails in the brake master cylinder (18) can be reduced by means of the actuated brake booster (26) in such a way that the brake pressure in the at least one brake circuit (10, 12) can additionally be reduced below the response pressure.

11. Brake system for a vehicle having a control apparatus (100) according to Claim 10.

## Revendications

1. Procédé pour faire fonctionner un système de freinage d'un véhicule, comprenant l'étape suivants :
limiter une augmentation de la pression de freinage dans au moins un circuit de freinage (10, 12) du système de freinage à une pression de déclenchement d'un volume accumulateur (46a, 46b) de l'au moins un circuit de freinage (10, 12) par commande d'au moins une première soupape de sortie de roue (40a, 40b) d'au moins un premier cylindre de frein de roue (14a, 14b) de l'au moins un circuit de freinage (10, 12) dans un état ouvert, au moins temporairement pendant une augmentation d'actionnement croissante par un conducteur du véhicule d'un actionnement d'un élément d'actionnement de freinage (22) raccordé à un cylindre de frein principal (18) du système de freinage ;
une réduction supplémentaire d'une pression de freinage dans l'au moins un circuit de freinage (10, 12) en dessous de la pression de déclenchement pendant une force d'actionnement constante de l'actionnement de l'élément d'actionnement de freinage (22) s'effectuant au moyen de l'étape suivante :
commande de l'au moins une première soupape de sortie de roue (40a, 40b) de l'au moins un premier cylindre de frein de roue (14a, 14b) dans un état fermé ; et
commande d'activation d'un servomoteur d'assistance au freinage (26) de telle sorte qu'une pression interne existant dans le cylindre de frein principal (18) soit réduite au moyen du servomoteur d'assistance au freinage commandé à l'activation (26).

2. Procédé selon la revendication 1, dans lequel le servomoteur d'assistance au freinage (26) est commandé à l'activation de telle sorte qu'une force d'amplification (Fv) exercée au moyen du servomoteur d'assistance au freinage (26) sur au moins un piston (19a, 19b) du cylindre de frein principal (18), qui amplifie une force (Ff) exercée par l'actionnement de l'élément d'actionnement de freinage (22) sur l'au moins un piston (19a, 19b) du cylindre de frein principal (18), soit réduite afin de réduire la pression interne.

3. Procédé selon la revendication 1, dans lequel le servomoteur d'assistance au freinage (26) est commandé à l'activation de telle sorte qu'au moyen du servomoteur d'assistance au freinage commandé à l'activation (26), une force opposée à une force (Ff) exercée par l'actionnement de l'élément d'actionnement de freinage (22) sur au moins un piston (19a, 19b) du cylindre de frein principal (18) soit exercée.

4. Procédé selon l'une quelconque des revendications précédentes, dans lequel, pendant la limitation de l'augmentation de pression dans l'au moins un circuit de freinage (10, 12) à la pression de déclenchement et/ou pendant la réduction supplémentaire de la pression de freinage dans l'au moins un circuit de freinage (10, 12) en dessous de la pression de déclenchement, au moins une première soupape d'entrée de roue (32a, 32b) de l'au moins un premier cylindre de frein de roue (14a, 14b) est commandée dans un état ouvert, et au moins une deuxième soupape d'entrée de roue (34a, 34b) d'au moins un deuxième cylindre de frein de roue (16a, 16b) de l'au moins un circuit de freinage (10, 12) est commandée dans un état fermé.

5. Procédé selon l'une quelconque des revendications précédentes, dans lequel avant la limitation de l'augmentation de pression dans l'au moins un circuit de freinage (10, 12) à la pression de déclenchement et/ou avant la réduction supplémentaire de la pression de freinage dans l'au moins un circuit de freinage (10, 12) en dessous de la pression de déclenchement, on détermine si un couple de freinage générateur (bgen) correspondant à la force d'actionnement de l'actionnement de l'élément d'actionnement de freinage (22) peut être exercé au moyen d'au moins un moteur électrique du véhicule, et la limitation de l'augmentation de pression dans l'au moins un circuit de freinage (10, 12) à la pression de déclenchement et/ou la réduction supplémentaire de la pression de freinage dans l'au moins un circuit de freinage (10, 12) en dessous de la pression de déclenchement n'est effectuée que si le couple de freinage générateur (bgen) correspondant à la force d'actionnement peut être exercé au moyen de l'au moins un moteur électrique.

6. Procédé selon la revendication 5, dans lequel si après la limitation de l'augmentation de pression dans l'au moins un circuit de freinage (10, 12) à la pression de déclenchement et/ou après la réduction supplémentaire de la pression de freinage dans l'au moins un circuit de freinage (10, 12) en dessous de la pression de déclenchement, on détermine que le couple de freinage générateur (bgen) correspondant à la force d'actionnement ne peut plus être exercé au moyen de l'au moins un moteur électrique, l'au moins une deuxième soupape d'entrée de roue (34a, 34b) de l'au moins un deuxième cylindre de frein de roue (16a, 16b) est commandée de l'état fermé dans un état ouvert.

7. Procédé selon la revendication 6, dans lequel après une commande de l'au moins une deuxième soupape d'entrée de roue (34a, 34b) de l'état fermé dans l'état ouvert, une régulation Δp est effectuée au moyen de l'au moins une première soupape d'entrée de roue (32a, 32b) de l'au moins un premier cylindre de frein de roue (14a, 14b).

8. Procédé selon la revendication 6 ou 7, dans lequel, si l'on a déterminé après la commande de l'au moins une deuxième soupape d'entrée de roue (34a, 34b) de l'état fermé dans l'état ouvert, que le couple de freinage générateur (bgen) correspondant à la force d'actionnement pouvait à nouveau être exercé au moyen de l'au moins un moteur électrique, la pression de freinage existant dans l'au moins un circuit de freinage (10, 12) est limitée en commandant l'au moins une première soupape d'entrée de roue (32a, 32b) et l'au moins une première soupape de sortie de roue (40a, 40b) dans l'état ouvert.

9. Procédé selon la revendication 8, dans lequel, pour à nouveau réduire de manière supplémentaire la pression de freinage dans l'au moins un circuit de freinage (10, 12) en dessous de la pression de déclenchement pendant une diminution de la force d'actionnement de l'actionnement de l'élément d'actionnement de freinage (22), l'au moins une première soupape de sortie de roue (40a, 40b) de l'au moins un premier cylindre de frein de roue (14a, 14b) est commandée dans l'état fermé, et le servomoteur d'assistance au freinage (26) est commandé à l'activation de telle sorte que la pression interne régnant à l'intérieur du cylindre de frein principal (18) soit à nouveau réduite au moyen du servomoteur d'assistance au freinage (26) commandé à l'activation.

10. Dispositif de commande (100) pour un système de freinage d'un véhicule, comprenant :
un dispositif de commande à l'activation (102) au moyen duquel au moins une première soupape de sortie de roue (40a, 40b) d'au moins un premier cylindre de frein de roue (14a, 14b) d'au moins un circuit de freinage (10, 12) du système de freinage peut être commandée dans un état ouvert par un conducteur du véhicule en tenant compte d'au moins un signal de capteur fourni (104) relatif à une force d'actionnement d'un actionnement d'un élément d'actionnement de freinage (22) relié à un cylindre de frein principal (18) du système de freinage, de telle sorte qu'une augmentation de la pression de freinage dans l'au moins un circuit de freinage (10, 12) à une pression de déclenchement d'un volume accumulateur (46a, 46b) de l'au moins un circuit de freinage (10, 12) puisse être limitée au moins temporairement pendant une force d'actionnement croissante de l'actionnement de l'élément d'actionnement de freinage (22) ;
un servomoteur d'assistance au freinage (26) pouvant en outre être commandé à l'activation au moyen du dispositif de commande à l'activation (102) en tenant compte d'au moins le signal de capteur fourni (104) pendant une force d'activation constante de l'activation de l'élément d'activation de freinage (22) de telle sorte qu'après que l'au moins une première soupape de sortie de roue (40a, 40b) a été commandée au moyen du dispositif de commande à l'activation (102) dans un état fermé, une pression interne existant dans le cylindre de frein principal (18) puisse être réduite au moyen du servomoteur d'assistance au freinage (26) commandé à l'activation de telle sorte que la pression de freinage dans l'au moins un circuit de freinage (10, 12) puisse être réduite davantage en dessous de la pression de déclenchement.

11. Système de freinage pour un véhicule comprenant un dispositif de commande (100) selon la revendication 10.
